# EUROPEAN PATENT SPECIFICATION

(11) **EP 3 896 809 B1**
(45) Date of publication and mention of the grant of the patent: **25.02.2026**
(21) Application number: 20169633.3
(22) Date of filing: 15.04.2020
(51) Int. Cl.: H02G 1/12

(54) **DEVICE AND METHOD FOR LOCALLY FLARING A BRAIDED TUBULAR STRUCTURE**
VORRICHTUNG UND VERFAHREN ZUM LOKALEN AUFWEITEN EINER GEFLOCHTENEN ROHRFÖRMIGEN STRUKTUR
DISPOSITIF ET PROCÉDÉ POUR ÉVASER LOCALEMENT UNE STRUCTURE TUBULAIRE TRESSÉE

(43) Date of publication of application: 20.10.2021
(73) Proprietor: TE Connectivity Morocco SARL, 94 152 Port Tanger Med (MA)
(72) Inventor: BOUGHABA, Saad, 90000 Tangier (MA); ATIF, Zouheir, 90000 Tangier (MA)
(74) Representative: Grünecker Patent- und Rechtsanwälte PartG mbB

(56) References cited:
- EP-A1- 3 618 207
- WO-A1-2019/092681
- DE-T5- 112018 002 202
- US-A- 4 719 697

## Description

### Technical field to which the invention relates

The present invention relates to a device and method for locally flaring, e.g. at an end section, a braided tubular structure, such as a shield of one or more electrical conductors, in particular of a shielded coaxial cable for transmitting electrical signals in data transmission applications.

### Background art

Numerous applications in the field of automotive engineering and in other technical fields rely on data being transmitted in the form of electrical signals via electrical conductors acting as a signal path for the electrical signals. To ensure sufficient signal transmission quality, shielded coaxial cables are usually deployed. Therein, the electrical conductors constitute a center core and are circumferentially surrounded by a tubular shield made from braided strands of copper wire or other kinds of metal wire. The shield functions based on the principle of a Faraday cage, protecting the electrical signals from external electrical noise and preventing the electrical signals from causing electromagnetic interference within surrounding components. In order to prevent direct contact of the electrical conductors with the shield, a dielectric insulator is interposed in between. Optionally, a layer of metal foil e.g., aluminium foil, may be situated between the dielectric insulator and the shield, the metal foil reflecting back internal and external electromagnetic radiation according to the so-called mirror effect.

At the source and/or destination of the electrical signals, suitable interfaces, such as plug connectors, may be used to connect the electrical conductors with components upstream and/or downstream of the signal path. In the case of shielded coaxial cables, the shield is radially distanced from the center core and the dielectric insulator is partially removed to make the center core accessible. Further, the shield needs to be connected to the interfaces, e.g. to a ground contact of the interface, in order to be effective. In certain applications, removal of the metal foil is necessary prior to the connection of the shield to the interface.

WO 2019/092681 A1 relates to an apparatus and process for preparing an end portion of a shielded electrical cable. The apparatus comprises a contact element moved around the cable by two linear stages.

US 4,719,697 A also relates to a method for preparing coaxial cables for termination. The apparatus comprises a pivoting arm with an extension carrying a wheel that is rotated off-centered around a shaft for flaring a braided shield.

EP 3 618 207 A1 relates to a cable preparation machine and a hand-held cable preparation tool. A blade assembly having a plurality of arms and braid blades mounted to the corresponding arms surrounds a cable opening configured to receive an end of a cable therein along a cable axis. The braid blades have edges configured to engage a cable braid of the cable and are driven inward by the arms to pinch the cable braid inward and flare outward an end of the cable braid.

DE 11 2018 002 202 T5 relates to a braid processing device that trims an end portion of an exposed braid of a braid-shielded cable. The braid processing device includes a braid raising mechanism that raises the exposed braid from a cable center portion of the cable prior to trimming. In the braid raising mechanism, multiple rollers are rotatably supported around a central axis of the braided shield cable.

In such applications, it is particularly desirable to evenly and effortlessly flare the shield, preferably without damaging the strands of the shield itself and the metal foil.

### Technical object to be achieved

The object of the present invention is to provide improved means for conducting the process of locally flaring a braided tubular structure in an even and effortless manner without damaging it.

### Disclosure of invention

The object is achieved by providing a device for flaring an end section of a braided tubular structure, such as a shield of an electrical conductor or cable, the device comprising a reception volume which has e.g., a cylindrical, peripheral boundary and is adapted to receive the end section of the braided tubular structure, and the device further comprising two or more rotatable rollers of which each has at least one peripheral roller surface at least partially facing the peripheral boundary of the reception volume and each is adapted to move relative to the reception volume in a peripheral direction about the reception volume, wherein the two or more rollers are arranged on opposite sides with respect to the reception volume, wherein each of the two or more rollers has a roller axle extending coaxially with a symmetry axis of the respective roller, wherein each of the two or more rollers is adapted to rotate about its roller axle and to revolve around the reception volume about an axis of revolution, wherein the axis of revolution extends through the reception volume, and wherein the roller axle of each roller is oblique with respect to the axis of revolution.

The above-mentioned solution is advantageous, since the reception volume may be freely defined in such a way that the peripheral boundary of the reception volume coincides with an outer circumferential surface of the end section of the braided tubular structure when the end section of the braided tubular structure is received within the reception volume. This renders the device to a certain extent independent of the geometry of the braided tubular structure and contributes to the flexibility of the device.

Once the reception volume is defined, the two or more rollers may be specifically adapted to move relative to the reception volume in such a manner that the at least one peripheral roller surface of each of the one or more rollers borders the peripheral boundary of the reception volume. In other words, the two or more rollers may be adapted to trace the peripheral boundary of the reception volume. Thus, the two or more rollers may roll over the outer circumferential surface of the braided tubular structure at the end section of the braided tubular structure received within the reception volume. Thereby the two or more rollers successively untangle strands of the braided tubular structure and gradually flare the braided tubular structure, while only exerting minimal to no normal force on the outer circumferential surface of the braided tubular structure. Therefore, damage to the strands of the braided tubular structure as well as to the interior of the braided tubular structure may be minimized or completely prevented. The result is a reduced scrap rate and consequently increased efficiency of the flaring process.

The above solution may be further improved by adding one or more of the following optional features. Each optional feature is advantageous on its own and may be combined independently with any other optional feature.

Hereinafter and for the sake of brevity, when referring to each roller, it shall be understood that each of the two or more rollers is meant, unless otherwise specified. Accordingly, when referring to all rollers, it shall be understood that all of the two or more rollers are meant, unless otherwise specified.

Each roller has a roller axle extending coaxially with a symmetry axis of the respective roller and is adapted to rotate about its roller axle. In particular, the roller axle may be an imaginary axis defining an orientation of the roller's rotation, or a stationary axle penetrating the respective roller as a separate structural element, or a rotating axle monolithically connected with the respective roller protruding as at least one e.g., cylindrical projection from the respective roller. In the latter two cases, the respective roller can be rotatably mounted in the device by means of its roller axle for wear reduction. It is to be understood that the term axle also covers pins, shafts and other types of fixed beams with bearings at their ends about which the respective roller may be adapted to rotate.

Alternatively or additionally, the device may comprise at least one cage for rotatably holding each roller.

According to another embodiment of the device, the at least one peripheral surface of each roller may extend about the symmetry axis of the respective roller. In other words, the at least one peripheral roller surface of each roller may extend about the roller axle of the respective roller, in particular in a circumferential direction with respect to the roller axle of the respective roller. Preferably, the at least one peripheral roller surface of each roller may continuously extend in the circumferential direction with respect to the roller axle of the respective roller forming a closed, rotationally symmetrical surface. Thus, the respective roller can continuously maintain rolling contact with the outer circumferential surface of the braided tubular structure during an entire rotation of the respective roller about its roller axle.

For example, at least one, preferably each roller, may be shaped as a disc, wherein the at least one peripheral roller surface corresponds with a peripheral surface of the disc. The one or more rollers may also have a cylindrical, spherical, conical or any other rotationally symmetrical shape.

For increased precision, the at least one peripheral roller surface of each roller may be convexly formed having an equatorial line extending on a plane perpendicular to the roller axle of the respective roller. Thus, each roller may establish rolling contact with the outer circumferential surface of the braided tubular structure at the equatorial line in a comparably narrow zone.

Each roller is adapted to revolve around the reception volume about the axis of revolution, wherein the axis of revolution extends through the reception volume, preferably through a center of the reception volume and/or coaxially with a center line of the reception volume. This embodiment is especially favourable for applications where the to-be-flared braided tubular structure is round, since each roller can be moved along a circular path in a tangential direction with respect to the braided tubular structure when the braided tubular structure is received within the reception volume. In particular, the device may comprise at least one spindle, wherein each roller is, preferably slidably, mounted on the at least one spindle and wherein the at least one spindle has a rotational axle extending coaxially with the axis of revolution.

According to another aspect of the invention, each roller may be spaced apart from the axis of revolution, which increases the range of motion for each roller.

The roller axle of each roller is oblique with respect to the axis of revolution as will be described in further detail below.

The device comprises two or more rollers arranged on opposite sides with respect to the reception volume in order to establish a symmetrical rolling engagement between the outer circumferential surface of the braided tubular structure and all rollers, thus resulting in an increased stability during operation of the device.

To achieve an even more stable rolling engagement, the device may comprise three or more rollers, preferably evenly distributed in a circular arrangement around the reception volume. With circular arrangement, it is to be understood that in a cross-section of the device, the cross-section being perpendicular to the center line of the reception volume, each point on the at least one peripheral roller surface of the respective roller, which is most proximal to the reception volume, is situated on an imaginary circle surrounding the reception volume.

Further, in a cross-section of the reception volume, the cross-section being perpendicular to the center line of the reception volume, the reception volume may exhibit a closed circumference, which preferably coincides with the above imaginary circle. Each roller may be adapted to move relative to the reception volume along a segment of said closed circumference, wherein the sum of all segments equals to at least the entire closed circumference. Thus, total wear may be distributed on all rollers when rolling over the outer circumferential surface of the braided tubular structure, leading to reduced individual wear on each roller.

Alternatively, each roller may be adapted to move relative to the reception volume along the entire closed circumference, allowing each roller to completely encircle the outer circumferential surface of the braided tubular structure. This embodiment is favourable e.g., if the device comprises exactly one roller.

According to one aspect of the invention, the roller axles of all rollers may be parallel to each other. Alternatively, all roller axles may be arranged in a conical configuration i.e., all roller axles may be preferably evenly distributed on a surface of an imaginary conical shape and may point towards a tip of the imaginary conical shape, wherein the imaginary conical shape is coaxial with the axis of revolution.

According to another possible embodiment of the device, at least two rollers are held at an adjustable distance from one another, the distance adjustment being possible prior to and during operation of the device. Due to the adjustable distance, the device can be used for braided tubular structures with varying outer diameters. For example, for a device with three rollers, a center line e.g., the roller axle, of each roller may extend through one corner of an isosceles triangle before distance adjustment and through one corner of an equilateral triangle after distance adjustment.

In order to automate the distance adjustment, the device may further comprise a distance control unit for manipulating and controlling the distance between the at least two rollers held at an adjustable distance.

At least one roller of the device may be adapted to move in a radial direction with respect to the reception volume prior to and during operation of the device, thus allowing the respective roller to be moved away from the reception volume in order to facilitate access to the reception volume. Once the end section of the braided tubular structure is received within the reception volume, the respective roller can be moved towards the reception volume and brought into contact with the outer circumferential surface of the braided tubular structure.

The distance between the reception volume and the at least one roller adapted to move in a radial direction with respect to the reception volume, may also be manipulated and controlled by the distance control unit. Preferably, the distance control unit conducts the manipulation exclusively based on distance and/or position rather than force or momentum. Thus, minimal to no normal force needs to be exerted on the outer circumferential surface of the braided tubular structure.

Likewise, for the purpose of automation, the device may comprise a rotational drive adapted to move each roller preferably automatically in the peripheral direction about the reception volume. In particular, the rotational drive may turn the at least one spindle in order to move each roller along the circular path in the tangential direction with respect to the braided tubular structure, while each roller rolls on the outer circumferential surface of the braided tubular structure.

According to another embodiment, the device may further comprise a displacement mechanism for guiding a relative movement between the reception volume and each roller, the relative movement preferably being a translational movement parallel to the center line of the reception volume i.e., in an axial direction with respect to the reception volume. In particular, the displacement mechanism may comprise a linear slider on which all rollers are mounted, such that a linear relative movement between the reception volume and all rollers is possible prior to and during operation of the device. By use of the displacement mechanism, all rollers can be moved to and radially aligned with a section of the braided tubular structure where the rollers have not yet rolled over. Thus, the braided tubular structure can be flared over an increased length as will be described in further detail below.

According to yet another possible embodiment of the device, the device may further comprise at least one holding mechanism adapted to e.g., temporarily fixate the braided tubular structure relative to each roller and adapted to position the end section of the braided tubular structure within the reception volume, preferably coaxially with the reception volume. In particular, the at least one holding mechanism may prevent movement of the braided tubular structure in a radial, axial and/or circumferential direction with respect to the reception volume. For this, the at least one holding mechanism may be constituted by at least two clamps adapted to mechanically clasp the braided tubular structure in between. Further, the holding mechanism may comprise a funnel-like structure having a narrower opening, which faces towards the at least two clamps, and a wider opening, which faces away from the at least two clamps. Optionally, the at least one holding mechanism may be mounted on the linear slider instead of the one or more rollers.

As another measure for automation, the displacement mechanism may comprise a linear drive adapted to move each roller preferably automatically relative to the reception volume e.g., in the axial direction with respect to the reception volume.

In one possible embodiment, the device may be adapted to simultaneously move each roller in the peripheral direction about the reception volume and in the axial direction with respect to the reception volume, so as to move each roller along a helicoidal path around the reception volume. In particular, the device may comprise an electrical control unit for synchronizing the movement of the rotational drive and the linear drive. The movement of each roller along the helicoidal path enables the device to continuously flare the braided tubular structure over an increased length.

In order to facilitate the movement of each roller along the helicoidal path, the roller axle of each roller is oblique with respect to the axis of revolution as already disclosed above. In particular, the roller axle of each roller may connect a point on a first imaginary circle with a point on a second imaginary circle. In this configuration, the first and second imaginary circles are concentrically aligned along the center line of the reception volume and spaced apart from each other in the direction of the center line of the reception volume, and wherein the connected points are mutually offset by a predefined angle with regard to the center line of the reception volume.

The device may be included in a fully-automatic production line. Alternatively, the device may be mounted on a work bench and operated at least partly manually.

Optionally, the at least one spindle may comprise a cylindrical chuck, which is attached to an end of the at least one spindle. On a front face of the cylindrical chuck, at least one jaw may be slidably mounted, wherein each roller is rotatably mounted on the at least one jaw and the at least one jaw is adapted to move all rollers, preferably radially, relative to the reception volume.

In embodiments with two or more rollers, the device may comprise at least two jaws arranged oppositely with respect to the reception volume on the front face of the cylindrical chuck. Each roller may be rotatably mounted on one of the at least two jaws, wherein a distance between the at least two jaws is adjustable prior to and during operation e.g., by means of the distance control unit.

In order to diversify the movability of each roller in embodiments with two or more rollers on at least one jaw, at least two rollers may be rotatably mounted, wherein a distance between said at least two rollers may be adjustable prior to and during operation of the device e.g., by means of the distance control unit.

The initial object is further achieved by a method for flaring an end section of a braided tubular structure, such as a shield of an electric conductor or cable, the method comprising the step of rolling with two or more rollers arranged on opposite sides of the braided tubular structure over an outer circumferential surface of the braided tubular structure at the end section of the braided tubular structure, preferably so as to successively untangle strands of the braided tubular structure at the end section of the braided tubular structure, wherein each of the two or more rollers has a roller axle extending coaxially with a symmetry axis of the respective roller, wherein each of the two or more rollers rotates about its roller axle and revolves around the reception volume about an axis of revolution extending through the reception volume, and wherein the roller axle of each roller is oblique with respect to the axis of revolution.

This method allows the end section of the braided tubular structure to be flared without the strands of the braided tubular structure being squeezed, pulled or otherwise excessively strained. Furthermore, the one or more rollers can maintain rolling contact with the outer circumferential surface of the braided tubular structure while only applying minimal to no pressure thereto. Thus, damage to the electric conductor or to internal components of the cable is minimized or prevented.

For increased reproducibility, the method may comprise, optionally and prior to the above rolling step, the step of securing the braided tubular structure, preferably by means of at least one holding mechanism, the step of positioning the end section of the braided tubular structure within a reception volume and the step of moving the one or more rollers to a position bordering the reception volume. In the above rolling step, each roller may be moved relative to the reception volume in a peripheral direction about the reception volume.

According to a favourable embodiment of the inventive method, the above positioning step, moving step and rolling step may be conducted within a cycle time of less than five seconds.

In order to flare the braided tubular structure over an increased length, the above-mentioned method may be continued as follows:
Subsequent to the above rolling step, the method may comprise the step of adjusting a relative position between each roller and the braided tubular structure, such that each roller is radially aligned with an un-flared section of the braided tubular structure, where the one or more rollers have not yet rolled over. The un-flared section of the braided tubular structure may be for example adjacent to the end section of the braided tubular structure.

The above adjusting step may be followed by the step of rolling with each roller over the outer circumferential surface of the braided tubular structure at the un-flared section of the braided tubular structure, wherein the one or more rollers may be moved in the same direction as in the preceding rolling step or in the opposite direction of the preceding rolling step.

The above adjusting step and rolling step may be repeated until the lengths and/or degree of flaring at the end section of the braided tubular structure satisfactorily meets the required specifications of the respective application.

Alternatively, the braided tubular structure may be flared over an increased length by moving each roller in an axial direction with respect to the braided tubular structure during the above rolling step. Thus, each roller can move along a helicoidal path with respect to the braided tubular structure.

The embodiments of the inventive method may be applied using a device according to one of the above-described embodiments.

In the following, exemplary embodiments of the invention are described with reference to the drawings. The embodiments shown and described are for explanatory purposes only. The combination of features shown in the embodiments may be changed according to the foregoing description. For example, a feature that is not shown in an embodiment but described above may be added if the technical effect associated with this feature is beneficial for a particular application. Vice versa, a feature shown as part of an embodiment may be omitted as described above, if the technical effect associated with this feature is not needed in a particular application.

In the drawings, elements that correspond to each other with respect to function and/or structure have been provided with the same reference numeral.

In the drawings:
Fig. 1 shows a schematic representation of a perspective view of a device comprising one roller according to one possible embodiment of the present disclosure;
Fig. 2 shows a schematic representation of a side view of the device comprising three rollers according to one possible embodiment;
Fig. 3 shows a schematic representation of a partially enlarged perspective view of the device comprising three rollers according to another possible embodiment;
Fig. 4 shows a schematic representation of a partially enlarged perspective view of the device comprising three rollers according to another possible embodiment;
Fig. 5 shows a schematic representation of a partially enlarged perspective view of the device comprising three rollers according to yet another possible embodiment; and
Fig. 6 shows a schematic representation of a partially enlarged perspective view of the device comprising an electronic control unit according to one possible embodiment.

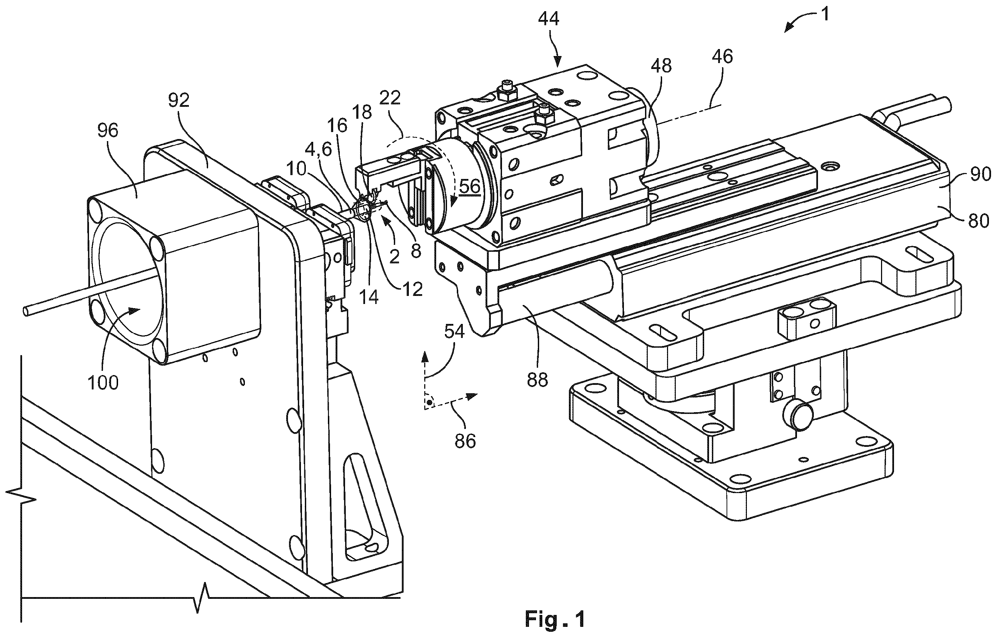

In the following, the structure of possible embodiments of a device 1 for flaring an end section 2 of a braided tubular structure 4, such as a shield 6 of an electric conductor 8 or cable 10, according to the present invention is explained with reference to the exemplary embodiments shown in Figs. 1 to 6. Further, Figs. 1 to 6 are used for explaining the method according to the present invention.

Fig. 1 shows a perspective view of the device 1 according to one possible embodiment of the present disclosure, the device 1 comprising a reception volume 12 which has e.g., a cylindrical, peripheral boundary 14 and is adapted to receive the end section 2 of the braided tubular structure 4. In particular, the reception volume 12 may be defined in such a way that the peripheral boundary 14 of the reception volume 12 preferably exactly coincides with an outer circumferential surface 16 of the braided tubular structure 4 once the end section 2 of the braided tubular structure 4 is received within the reception volume 12.

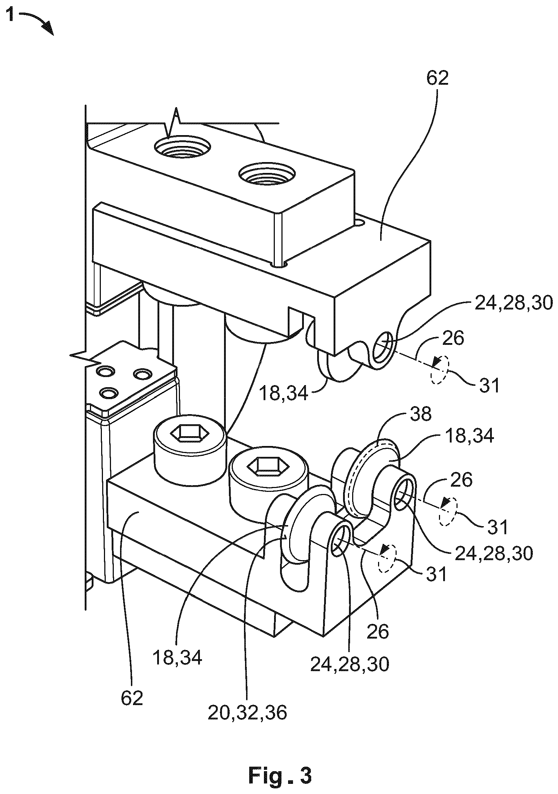

The device 1 may further comprise one or more rollers 18 of which each has at least one peripheral roller surface 20 (see Fig. 3) at least partially facing the peripheral boundary 14 of the reception volume 12 and each is adapted to move relative to the reception volume 12 in a peripheral direction 22 about the reception volume 12. Upon definition of the reception volume 12, the one or more rollers 18 may be specifically adapted to trace the peripheral boundary 14 of the reception volume 12. In particular, the one or more rollers 18 may move relative to the reception volume 12 in the peripheral direction 22, while the at least one peripheral roller surface 20 of each of the one or more rollers 18 borders the peripheral boundary 14 of the reception volume 12.

Since the outer circumferential surface 16 of the braided tubular structure 4 coincides with the peripheral boundary 14 of the reception volume 12, the one or more rollers 18 may engage in rolling contact with the outer circumferential surface 16 of the braided tubular structure 4 received within the reception volume 12. When the one or more rollers 18 roll over the outer circumferential surface 16 of the braided tubular structure 4 at the end section 2 of the braided tubular structure 4, individual strands of the braided tubular structure may successively be untangled. This gradually leads to the intended flaring of the braided tubular structure 4, while only minimal to no normal force is exerted on the outer circumferential surface 16 of the braided tubular structure 4.

In Fig. 1, the device 1 is shown with exactly one roller 18. This embodiment may be utilized when the to-be-flared braided tubular structure 4 is relatively stiff and may support its own weight as well as any normal force exerted on the outer circumferential surface 16 of the braided tubular structure 4 by the one roller 18.

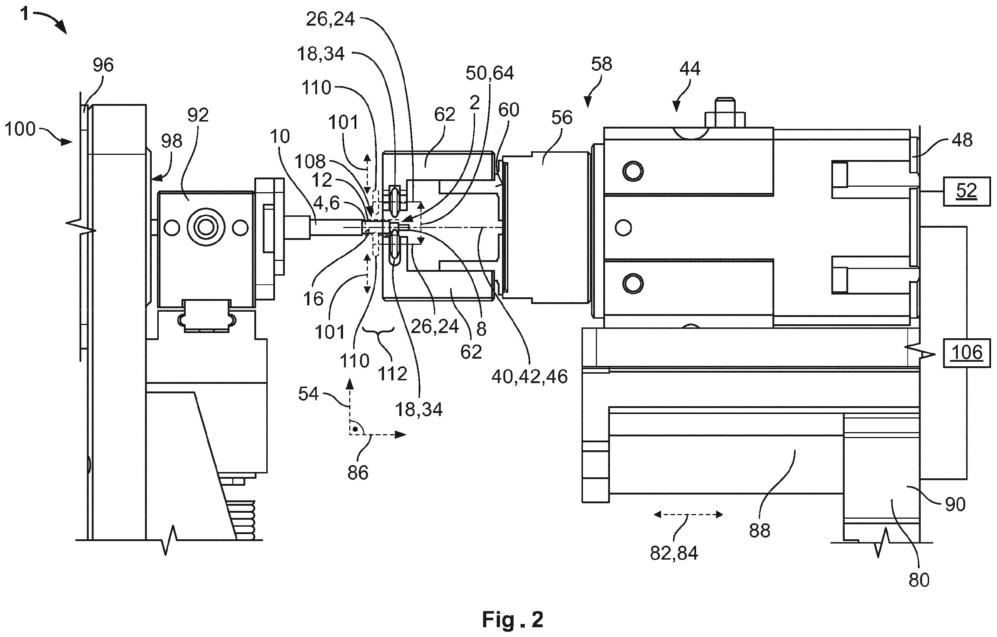

According to the geometric dimensions and material characteristics of the to-be-flared braided tubular structure 4, a stabilization may be necessary. For this stabilization, the device 1 may comprise more than one e.g., two, three, four, five, six or even more rollers 18. As exemplarily shown in Figs. 2 to 6, the device 1 may comprise three rollers 18.

Hereinafter and for the sake of brevity, when referring to each roller 18, it shall be understood that each of the one or more rollers 18 is meant, unless specified otherwise. Accordingly, when referring to all rollers 18, it shall be understood that all of the one or more rollers 18 are meant, unless otherwise specified.

As can be seen from Figs. 2 and 3, each roller 18 may have a roller axle 24 extending coaxially with a symmetry axis 26 of the respective roller 18. Each roller 18 may be adapted to rotate about its roller axle 24. In the shown embodiment of Fig. 3, the roller axle 24 of each roller 18 is a rotating axle 28 monolithically connected with the respective roller 18 and protruding therefrom as cylindrical projections 30. Alternatively, the roller axle 24 may be a stationary axle penetrating the respective roller as a separate structural element. In both cases, the roller axles 24 may be utilized to rotatably hold the respective roller 18 in the device 1. It is to be understood that the term axle also covers pins, shafts and other types of fixed beams with bearings at their ends about which the respective roller 18 may be adapted to rotate.

In another alternative embodiment, the roller axles 24 may be constituted by imaginary axes merely defining an orientation of the roller's rotation. The device may comprise at least one cage (not shown) for rotatably holding each roller 18 in such an embodiment.

The roller axles 24 of all rollers 18 may be parallel to each other. Alternatively, all roller axles 24 may be arranged in a conical configuration i.e., all roller axles 24 may be distributed, preferably evenly, on a surface of an imaginary conical shape (not shown).

Further in Fig. 3, it can be seen that the at least one peripheral roller surface 20 of each roller 18 may extend about the symmetry axis 26 and subsequently also about the roller axle 24 of the respective roller 18. Preferably, the at least one peripheral roller surface 20 of each roller 18 may continuously extend in a circumferential direction 31 with respect to the roller axle 24 of the respective roller 18 forming a closed, rotationally symmetrical surface 32.

In the shown embodiment of Fig. 3, each roller 18 is shaped as a disc 34, wherein the at least one peripheral roller surface 20 corresponds with a peripheral surface 36 of the disc 34. As is further shown, the at least one peripheral roller surface 20 of each roller 18 is convexly formed having an equatorial line 38 extending on a plane perpendicular to the roller axle 24 of the respective roller 18. Alternatively, the one or more rollers 18 may also have a cylindrical, spherical, conical or any other rotationally symmetrical shape.

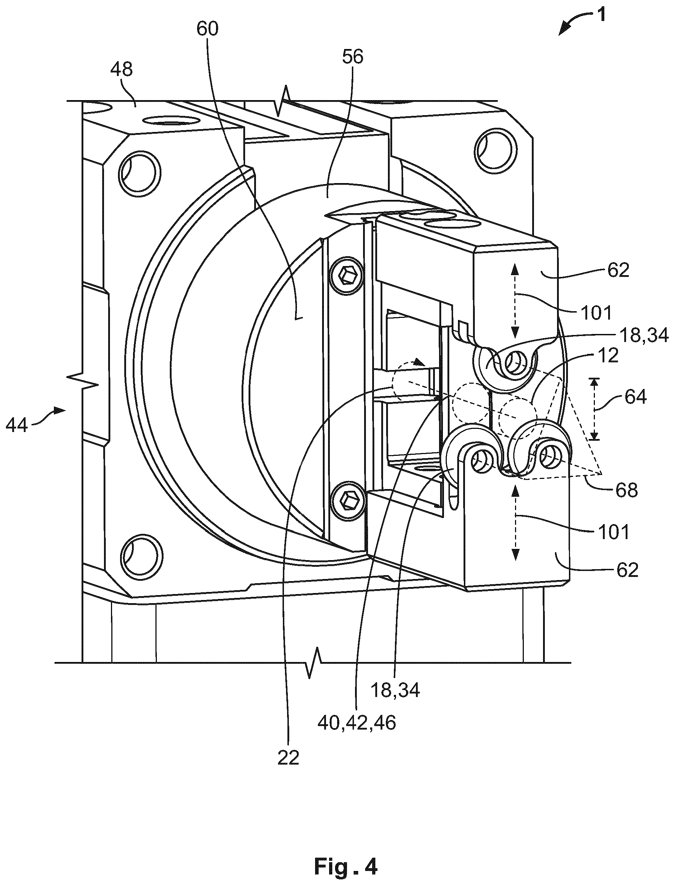

As is indicated in Fig. 4, each roller 18 may be adapted to revolve around the reception volume 12 about an axis of revolution 40. The axis of revolution 40 may extend through the reception volume 12, preferably coaxially with a center line 42 of the reception volume 12. In particular, each roller 18 can thus be moved along a circular path in a tangential direction respect to the braided tubular structure 4 when the braided tubular structure 4 is received within the reception volume 12.

More specifically, the device 1 may comprise at least one spindle 44 (see Fig. 1) having a rotational axle 46 extending coaxially with the axis of revolution 40. The device 1 may further comprise a rotational drive 48 adapted to move each roller 18, preferably automatically, in the peripheral direction 22 about the reception volume 12. In particular, the rotational drive 48 may turn the at least one spindle 44.

Each roller 18 may be mounted, preferably slidably, on the at least one spindle 44 and spaced apart from the axis of revolution 40 (see Fig. 2). The roller axle 24 of each roller 18 is oblique with respect to the axis of revolution 40.

At least two rollers 18 of the device 1 may be held at an adjustable distance 50 from one another (see Fig. 2), the distance adjustment being possible prior to and during operation of the device 1. The device 1 may further comprise a distance control unit 52 for manipulating and controlling the adjustable distance 50 between the at least two rollers 18 held at the adjustable distance 50.

At least one roller 18 of the device 1 may be adapted to move in a radial direction 54 with respect to the reception volume 12. Thereby, the respective roller 18 can be moved away from the reception volume 12 in order to clear access to the reception volume 12. This facilitates the insertion of the end section 2 of the braided tubular structure 4 into the reception volume 12. Once the end section 2 of the braided tubular structure 4 is received within the reception volume 12, the respective roller 18 can be moved towards the reception volume 12 and brought into contact with the outer circumferential surface 16 of the braided tubular structure 4. For this, the at least one spindle 44 may comprise a cylindrical chuck 56, which is attached to an end 58 of the at least one spindle 44 and on a front face 60 of the cylindrical chuck 56, at least one jaw 62 may be slidably mounted, wherein each roller 18 is rotatably mounted on the at least one jaw 62. Particularly, the at least one jaw 62 may be oriented to move each roller 18 radially relative to the reception volume 12.

As is indicated in Figs. 2 and 4 with dashed arrows 101, preferably all rollers 18 are adapted to move in the radial direction 54. Accordingly, the device 1 may comprise at least two jaws 62 arranged oppositely with respect to the reception volume 12 on the front face 60 of the cylindrical chuck 56. Each roller 18 may be rotatably mounted on one of the at least two jaws 62, wherein the distance 64 between the at least two jaws 62 may be adjustable e.g., by means of the above distance control unit 52.

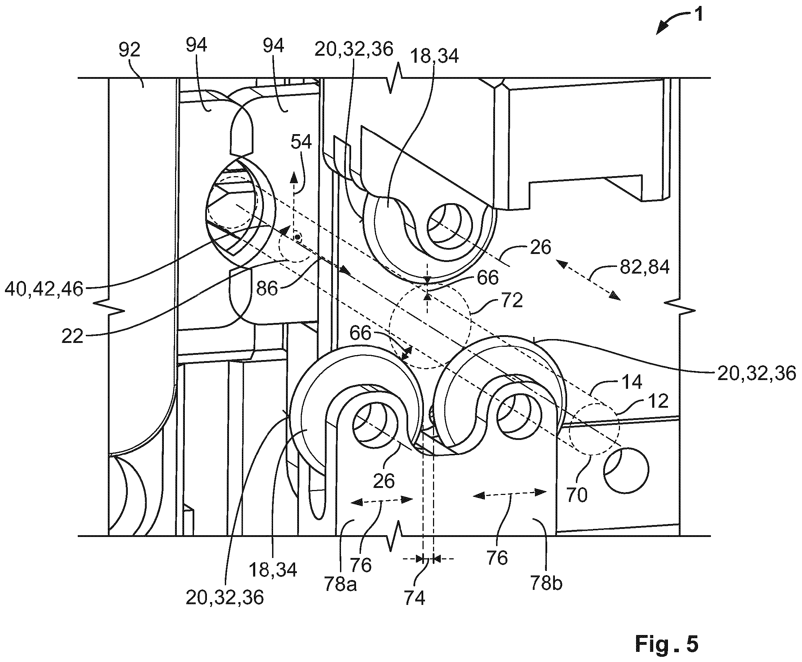

In an embodiment of the device 1 comprising three rollers 18, the above distance control unit 52 may be utilized to manipulate and control the distance 66 (see Fig. 5) between the reception volume 12 and the at least one peripheral roller surface 20 of the respective rollers 18 in such a way that the three rollers 18 may have their respective roller axles 24 each extend through one corner of an imaginary isosceles triangle 68 before distance adjustment (see Fig. 4). After distance adjustment, the three rollers 18 may have their respective roller axles 24 each extend through one corner of an imaginary equilateral triangle (not shown).

Moving to Fig. 5, it can be seen that in a cross-section of the reception volume 12, the cross-section being perpendicular to the center line 42 of the reception volume 12, the reception volume 12 may exhibit a closed circumference 70. Each roller 18 may be adapted to move relative to the reception volume 12 along a segment of the closed circumference 70 of the reception volume 12.

Alternatively, each roller may be adapted to move relative to the reception volume 12 along the entire closed circumference 70 of the reception volume 12.

As further shown in Fig. 5, the three rollers 18 may be distributed in a circular arrangement around the reception volume 12. In the shown circular arrangement, each point on the at least one peripheral roller surface 20 of the respective roller 18, which is most proximal to the reception volume 12, is situated on an imaginary circle 72 surrounding the reception volume 12. Preferably, the imaginary circle 72 coincides with the above closed circumference 70 of the reception volume 12 and/or the three rollers 18 are evenly distributed on the imaginary circle 72. The even distribution on the imaginary circle 72 of the three rollers 18 corresponds with the configuration described above where the three rollers 18 may have their respective roller axles 24 each extend through one corner of the equilateral triangle (not shown).

Alternatively, in an embodiment of the device 1 with two rollers (not shown), the two rollers may be arranged on opposite sides of the reception volume 12. In an embodiment of the device 1 with a higher even number of rollers, the rollers may be pairwise arranged on opposite sides with respect to the reception volume 12.

On at least one jaw 62, at least two rollers 18 may be rotatably mounted (see Figs. 3 to 5). Optionally, a distance 74 between said at least two rollers 18 may be adjustable prior to and during operation of the device 1 e.g., by means of the above distance control unit 52. This is exemplarily indicated by dashed arrows 76 in Fig. 5. In particular, the at least one jaw 62 may be constituted by two separate halves 78a, 78b, which are movable relative to each other.

Returning to Figs. 1 and 2, it can be seen that the device 1 may further comprise a displacement mechanism 80 for guiding a relative movement 82 between the reception volume 12 and each roller 18. The relative movement 82 is preferably a translational movement 84 parallel to the center line 42 of the reception volume 12. In other words, the relative movement 82 may take place in an axial direction 86 with respect to the reception volume 12 and the braided tubular structure 4 received within the reception volume 12. In particular, the displacement mechanism 80 may comprise a linear slider 88 on which all rollers are mounted, directly or indirectly. Further, the displacement mechanism 80 may comprise a linear drive 90 adapted to move each roller 18, preferably automatically, relative to the reception volume 12 e.g., in the axial direction 86 with respect to the reception volume 12.

The device 1 may further comprise at least one holding mechanism 92 adapted to e.g., temporarily fixate the braided tubular structure 4 relative to each roller 18 and adapted to position the end section 2 of the braided tubular structure 4 within the reception volume 12, preferably coaxially with the reception volume 12 (see Fig. 2). As is depicted in Fig. 5, the at least one holding mechanism 92 may be constituted by at least two clamps 94, which mechanically clasp the braided tubular structure 4 in between. Further, the holding mechanism may comprise a funnel-like structure 96 having a narrower opening 98, which faces towards the at least two clamps 94, and a wider opening 100, which faces away from the at least two clamps 94. Instead of the one or more rollers 18, the at least one holding mechanism 92 may be mounted on the linear slider 88 of the displacement mechanism 80 described above.

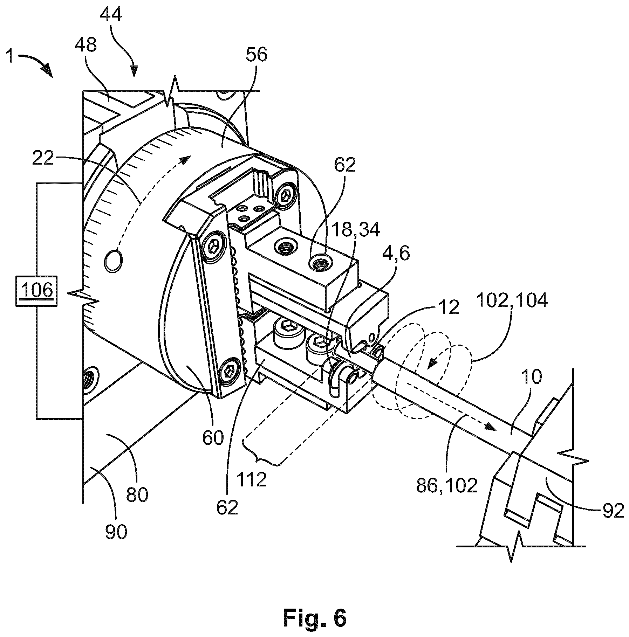

As is indicated by a set of dashed arrows 102 in Fig. 6, the device 1 may be adapted to simultaneously move each roller 18 in the peripheral direction 22 about the reception volume 12 and in the axial direction 86 with respect to the reception volume 12, so as to move each roller 18 along a helicoidal path 104 around the reception volume 12. For this, an electrical control unit 106 may be provided in the device 1 for synchronizing the movement of the rotational drive 48 and the linear drive 90.

In the following, the method for locally flaring an end section 2 of a braided tubular structure 4, such as a shield 6 of an electric conductor 8 or cable 10 according to the present invention will be explained with the help of Figs. 1 to 6. The method comprises the step of rolling with one or more rollers 18 over an outer circumferential surface 16 of the braided tubular structure 4 at the end section 2 of the braided tubular structure 4, preferably so as to successively untangle strands of the braided tubular structure 4 and gradually flare the end section 2 of the braided tubular structure 4. This step is depicted in Fig. 1.

As is recognizable from Fig. 1, the method may comprise, optionally and prior to the above rolling step, the step of securing the braided tubular structure 4, preferably by means of at least one holding mechanism 92, the step of positioning the end section 2 of the braided tubular structure 4 within a reception volume 12 and the step of moving the one or more rollers 18 to a position bordering the reception volume 12. Moreover, in the above rolling step, each roller 18 may be moved relative to the reception volume 12 in a peripheral direction 22 about the reception volume 12.

Preferably, the above positioning step, moving step and rolling step may be conducted within a cycle time of less than five seconds.

Subsequent to the above rolling step, the method may comprise the step of adjusting a relative position between each roller 18 and the braided tubular structure 4 received within the reception volume 12, such that each roller 18 is radially aligned with an un-flared section 108 of the braided tubular structure 4. The un-flared section 108 of the braided tubular structure 4 is characterized in that it is a section where the one or more rollers 18 have not yet rolled over. For example, the un-flared section 108 of the braided tubular structure 4 may be adjacent to the end section 2 of the braided tubular structure 4. This adjustment step is depicted in Fig. 2 by dashed contour lines 110 of each roller 18 symbolizing the location into which the respective roller 18 will be moved subsequently.

The above adjusting step may be followed by the step of rolling with each roller 18 over the outer circumferential surface 16 of the braided tubular structure 4 at the un-flared section 108 of the braided tubular structure 4. Herein, the one or more rollers 18 may be moved in the same direction as depicted in Fig. 1 or in the opposite direction.

Optionally, the above adjusting step and rolling step may be repeated until a length 112 (see Fig. 6) and/or degree of flaring at the end section 2 of the braided tubular structure 4 satisfactorily meets the required specifications of the respective application.

Fig. 6 shows an alternative embodiment of the inventive method, wherein the end section 2 of the braided tubular structure 4 may be flared over the length 112 by moving each roller 18 in an axial direction 86 with respect to the braided tubular structure 4 during the above rolling step. Thus, each roller 18 follows a helicoidal path 104 with respect to the braided tubular structure 4.

### REFERENCE SIGNS

- 1: device
- 2: end section
- 4: braided tubular structure
- 6: shield
- 8: electric conductor
- 10: cable
- 12: reception volume
- 14: peripheral boundary
- 16: outer circumferential surface
- 18: roller
- 20: peripheral roller surface
- 22: peripheral direction
- 24: roller axle
- 26: symmetry axis
- 28: rotating axle
- 30: cylindrical projection
- 31: circumferential direction
- 32: closed, rotationally symmetrical surface
- 34: disc
- 36: peripheral surface
- 38: equatorial line
- 40: axis of revolution
- 42: center line
- 44: spindle
- 46: rotational axle
- 48: rotational drive
- 50: adjustable distance
- 52: distance control unit
- 54: radial direction
- 56: cylindrical chuck
- 58: end
- 60: front face
- 62: jaw
- 64: distance
- 66: distance
- 68: isosceles triangle
- 70: closed circumference
- 72: circle
- 74: distance
- 76: dashed arrow
- 78a, 78b: half
- 80: displacement mechanism
- 82: relative movement
- 84: translational movement
- 86: axial direction
- 88: linear slider
- 90: linear drive
- 92: holding mechanism
- 94: clamp
- 96: funnel-like structure
- 98: narrower opening
- 100: wider opening
- 101: dashed arrow
- 102: dashed arrow
- 104: helicoidal path
- 106: electrical control unit
- 108: un-flared section
- 110: dashed contour line
- 112: length

## Claims

1. Device (1) for flaring an end section (2) of a braided tubular structure (4), such as a shield (6) of an electrical conductor (8),
the device (1) comprising a reception volume (12) which has a peripheral boundary (14) and is adapted to receive the end section (2) of the braided tubular structure (4);
the device (1) further comprising two or more rotatable rollers (18) of which each has at least one peripheral roller surface (20) facing the peripheral boundary (14) of the reception volume (12) and each is adapted to move relative to the reception volume (12) in a peripheral direction (22) about the reception volume (12), wherein the two or more rollers (18) are arranged on opposite sides with respect to the reception volume (12), wherein each of the two or more rollers (18) has a roller axle (24) extending coaxially with a symmetry axis (26) of the respective roller (18), wherein each of the two or more rollers (18) is adapted to rotate about its roller axle (24) and to revolve around the reception volume (12) about an axis of revolution (40), wherein the axis of revolution (40) extends through the reception volume (12), **characterised in that** the roller axle (24) of each roller (18) is oblique with respect to the axis of revolution (40).

2. Device (1) according to claim 1, wherein the at least one peripheral roller surface (20) of each of the one or more rollers (18) extends about the respective roller axle (24).

3. Device (1) according to claim 1, wherein each of the one or more rollers (18) is spaced apart from the axis of revolution (40).

4. Device (1) according to any one of claims 1 to 3, wherein the device (1) comprises three or more rollers (18) distributed in a circular arrangement around the reception volume (12).

5. Device (1) according to any one of claims 1 to 4, wherein at least two rollers (18) are held at an adjustable distance (50) from one another.

6. Device (1) according to any one of claims 1 to 5, wherein at least one roller (18) is adapted to move in a radial direction (54) with respect to the reception volume (12).

7. Device (1) according to any one of claims 1 to 6, wherein the device (1) comprises a rotational drive (48) adapted to move each of the one or more rollers (18) in the peripheral direction (22) about the reception volume (12).

8. Device (1) according to any one of claims 1 to 7, wherein the device (1) comprises a displacement mechanism (80) for guiding a relative movement (82) between the reception volume (12) and each of the one or more rollers (18).

9. Device (1) according to claim 8, wherein the displacement mechanism (80) comprises a linear drive (90) adapted to move each of the one or more rollers (18) relative to the reception volume (12).

10. Device (1) according to any one of claims 1 to 9, wherein the device (1) is adapted to simultaneously move each of the one or more rollers (18) in the peripheral direction (22) about the reception volume (12) and in an axial direction (86) with respect to the reception volume (12), so as to move each of the one or more rollers (18) along a helicoidal path (104) around the reception volume (12).

11. Method for flaring an end section (2) of a braided tubular structure (4), such as a shield (6) of an electric conductor (8), using the device according to any of claims 1-10, comprising the step of rolling with two or more rollers (18) arranged on opposite sides with respect to the reception volume (12) over an outer circumferential surface (16) of the braided tubular structure (4) at the end section (2) of the braided tubular structure (4), wherein each of the two or more rollers (18) has a roller axle (24) extending coaxially with a symmetry axis (26) of the respective roller (18), wherein each of the two or more rollers (18) rotates about its roller axle (24) and revolves around the reception volume (12) about an axis of revolution (40) extending through the reception volume (12), **characterised in that** the roller axle (24) of each roller (18) is oblique with respect to the axis of revolution (40).

## Patentansprüche

1. Vorrichtung (1) zum Aufweiten eines Endabschnitts (2) einer geflochtenen röhrenförmigen Struktur (4), wie beispielsweise einer Abschirmung (6) eines elektrischen Leiters (8),
wobei die Vorrichtung (1) einen Aufnahmeraum (12) umfasst, der eine Umfangsbegrenzung (14) aufweist und zum Aufnehmen des Endabschnitts (2) der geflochtenen röhrenförmigen Struktur (4) eingerichtet ist;
die Vorrichtung (1) des Weiteren zwei oder mehr drehbare Rollen (18) umfasst, die jeweils wenigstens eine Rollen-Umfangsfläche (20) aufweisen, die der Umfangsbegrenzung (14) des Aufnahmeraums (12) zugewandt ist, und jeweils so eingerichtet sind, dass sie sich relativ zu dem Aufnahmeraum (12) in einer Umfangsrichtung (22) um den Aufnahmeraum (12) herum bewegen, wobei die zwei oder mehr Rollen (18) an gegenüberliegenden Seiten in Bezug auf den Aufnahmeraum (12) angeordnet sind, die zwei oder mehr Rollen (18) jeweils eine Rollenachse (24) aufweisen, die sich koaxial zu einer Symmetrieachse (26) der jeweiligen Rolle (18) erstreckt, die zwei oder mehr Rollen (18) jeweils so eingerichtet sind, dass sie sich um ihre Rollenachse (24) herum drehen und um eine Rotationsachse (40) um den Aufnahmeraum (12) herum rotieren, wobei die Rotationsachse (40) durch den Aufnahmeraum (12) hindurch verläuft, **dadurch gekennzeichnet, dass** die Rollenachse (24) jeder Rolle (18) in Bezug auf die Rotationsachse (40) geneigt ist.

2. Vorrichtung (1) nach Anspruch 1, wobei die wenigstens eine Rollen-Umfangsfläche (20) der einen oder mehreren Rolle/n (18) jeweils um die entsprechende Rollenachse (24) herum verläuft.

3. Vorrichtung (1) nach Anspruch eins, wobei die eine oder mehreren Rolle/n (18) jeweils von der Rotationsachse (40) beabstandet ist/sind.

4. Vorrichtung (1) nach einem der Ansprüche 1 bis 3, wobei die Vorrichtung (1) drei oder mehr Rollen (18) umfasst, die in einer kreisförmigen Anordnung um den Aufnahmeraum (12) herum verteilt sind.

5. Vorrichtung (1) nach einem der Ansprüche 1 bis 4, wobei wenigstens zwei Rollen (18) in einem verstellbaren Abstand (50) zueinander gehalten werden.

6. Vorrichtung (1) nach einem der Ansprüche 1 bis 5, wobei wenigstens eine Rolle (18) so eingerichtet ist, dass sie sich in einer radialen Richtung (54) in Bezug auf den Aufnahmeraum (12) bewegt.

7. Vorrichtung (1) nach einem der Ansprüche 1 bis 6, wobei die Vorrichtung (1) einen Drehantrieb (48) umfasst, der so eingerichtet ist, dass er die eine oder die mehreren Rolle/n (18) jeweils in der Umfangsrichtung (22) um den Aufnahmeraum (12) herum bewegt.

8. Vorrichtung (1) nach einem der Ansprüche 1 bis 7, wobei die Vorrichtung (1) einen Verschiebemechanismus (80) umfasst, mit dem eine relative Bewegung (82) des Aufnahmeraums (12) und jeder der einen oder mehreren Rolle/n (18) zueinander geführt wird.

9. Mechanismus (8) nach Anspruch 1, wobei der Verschiebemechanismus (80) einen Linearantrieb (90) umfasst, der so eingerichtet ist, dass er die eine oder mehreren Rolle/n (18) jeweils relativ zu dem Aufnahmeraum (12) bewegt.

10. Vorrichtung (1) nach einem der Ansprüche 1 bis 9, wobei die Vorrichtung (1) so eingerichtet ist, dass sie gleichzeitig die eine oder mehreren Rolle/n (18) jeweils in der Umfangsrichtung (22) um den Aufnahmeraum (12) herum und in einer axialen Richtung (86) in Bezug auf den Aufnahmeraum (12) bewegt, und so die eine oder die mehreren Rolle/n (18) jeweils auf einem schraubenförmigen Weg (104) um den Aufnahmeraum (12) herum bewegt.

11. Verfahren (1) zum Aufweiten eines Endabschnitts (2) einer geflochtenen röhrenförmigen Struktur (4), wie beispielsweise einer Abschirmung (6) eines elektrischen Leiters (8), unter Verwendung der Vorrichtung nach einem der Ansprüche 1 - 10, das den Schritt des Rollens mit zwei oder mehr Rollen (18), die an gegenüberliegenden Seiten in Bezug auf den Aufnahmeraum (12) angeordnet sind, über eine Außenumfangsfläche (16) der geflochtenen röhrenförmigen Struktur (4) an dem Endabschnitt (2) der geflochtenen röhrenförmigen Struktur (4) umfasst, wobei die zwei oder mehr Rollen (18) jeweils eine Rollenachse (24) aufweisen, die sich koaxial zu einer Symmetrieachse (26) der jeweiligen Rolle (18) erstreckt, die zwei oder mehr Rollen (18) sich jeweils um ihre Rollenachse (24) herum drehen und um eine Rotationsachse (40) um den Aufnahmeraum (12) herum rotieren, die durch den Aufnahmeraum (12) hindurch verläuft, **dadurch gekennzeichnet, dass** die Rollenachse (24) jeder Rolle (18) in Bezug auf die Rotationsachse (40) geneigt ist.

## Revendications

1. Dispositif (1) pour évaser une section d'extrémité (2) d'une structure tubulaire tressée (4), telle qu'un blindage (6) d'un conducteur électrique (8),
le dispositif (1) comprenant un volume de réception (12) qui possède une délimitation périphérique (14) et est adapté pour recevoir la section d'extrémité (2) de la structure tubulaire tressée (4) ;
le dispositif (1) comprenant en outre deux rouleaux rotatifs ou plus (18) comportant chacun au moins une surface de rouleau périphérique (20) faisant face à la délimitation périphérique (14) du volume de réception (12) et adaptés chacun pour se déplacer par rapport au volume de réception (12) en direction périphérique (22) autour du volume de réception (12), dans lequel lesdits deux rouleaux ou plus (18) sont agencés sur des côtés opposés par rapport au volume de réception (12), dans lequel chacun desdits deux rouleaux ou plus (18) possède un axe de rouleau (24) qui s'étend coaxialement avec un axe de symétrie (26) du rouleau respectif (18), dans lequel chacun desdits deux rouleaux ou plus (18) est adapté pour tourner autour de son axe de rouleau (24) et pour tourner autour du volume de réception (12) autour d'un axe de révolution (40), dans lequel l'axe de révolution (40) s'étend à travers le volume de réception (12),
**caractérisé en ce que** l'axe de rouleau (24) de chaque rouleau (18) est oblique par rapport à l'axe de révolution (40).

2. Dispositif (1) selon la revendication 1, dans lequel ladite au moins une surface de rouleau périphérique (20) de chacun desdits un ou plusieurs rouleaux (18) s'étend autour de l'axe de rouleau respectif (24).

3. Dispositif (1) selon la revendication 1, dans lequel chacun desdits un ou plusieurs rouleaux (18) est espacé de l'axe de révolution (40).

4. Dispositif (1) selon l'une quelconque des revendications 1 à 3, dans lequel le dispositif (1) comprend trois rouleaux ou plus (18) distribués selon un agencement circulaire autour du volume de réception (12).

5. Dispositif (1) selon l'une quelconque des revendications 1 à 4, dans lequel au moins deux rouleaux (18) sont maintenus à une distance réglable (50) l'un de l'autre.

6. Dispositif (1) selon l'une quelconque des revendications 1 à 5, dans lequel au moins un rouleau (18) est adapté pour se déplacer en direction radiale (54) par rapport au volume de réception (12).

7. Dispositif (1) selon l'une quelconque des revendications 1 à 6, dans lequel le dispositif (1) comprend un entraînement rotatif (48) adapté pour déplacer chacun desdits un ou plusieurs rouleaux (18) en direction périphérique (22) autour du volume de réception (12).

8. Dispositif (1) selon l'une quelconque des revendications 1 à 7, dans lequel le dispositif (1) comprend un mécanisme de déplacement (80) pour guider un mouvement relatif (82) entre le volume de réception (12) et chacun desdits un ou plusieurs rouleaux (18).

9. Dispositif (1) selon la revendication 8, dans lequel le mécanisme de déplacement (80) comprend un entraînement linéaire (90) adapté pour déplacer chacun desdits un ou plusieurs rouleaux (18) par rapport au volume de réception (12).

10. Dispositif (1) selon l'une quelconque des revendications 1 à 9, dans lequel le dispositif (1) est adapté pour déplacer simultanément chacun desdits un ou plusieurs rouleaux (18) en direction périphérique (22) autour du volume de réception (12) et en direction axiale (86) par rapport au volume de réception (12), afin de déplacer chacun desdits un ou plusieurs rouleaux (18) le long d'un chemin hélicoïdal (104) autour du volume de réception (12).

11. Procédé d'évasement d'une section d'extrémité (2) d'une structure tubulaire tressée (4), telle qu'un blindage (6) d'un conducteur électrique (8), en utilisant le dispositif selon l'une quelconque des revendications 1 à 10, comprenant l'étape de roulement avec deux rouleaux ou plus (18) agencés sur des côtés opposés par rapport au volume de réception (12) sur une surface circonférentielle externe (16) de la structure tubulaire tressée (4) à la section d'extrémité (2) de la structure tubulaire tressée (4), dans lequel chacun desdits deux rouleaux ou plus (18) possède un axe de rouleau (24) qui s'étend coaxialement avec un axe de symétrie (26) du rouleau respectif (18), dans lequel chacun desdits deux rouleaux ou plus (18) tourne autour de son axe de rouleau (24) et tourne autour du volume de réception (12) autour d'un axe de révolution (40) qui s'étend à travers le volume de réception (12),
**caractérisé en ce que** l'axe de rouleau (24) de chaque rouleau (18) est oblique par rapport à l'axe de révolution (40) .
